# EUROPÄISCHE PATENTSCHRIFT

(11) **EP 2 379 888 B1**
(45) Veröffentlichungstag und Bekanntmachung des Hinweises auf die Patenterteilung: **12.09.2018**
(21) Anmeldenummer: 09774680.4
(22) Anmeldetag: 15.12.2009
(51) Int. Cl.: F04B 39/00, F04B 45/04, F04B 45/047, B60T 17/02

(54) **MOTOR-PUMPENAGGREGAT**
MOTOR-PUMP ASSEMBLY
GROUPE MOTOPOMPE

(30) Priorität: 19.12.2008 DE 102008064151; 10.12.2009 DE 102009054499
(43) Veröffentlichungstag der Anmeldung: 26.10.2011
(73) Patentinhaber: Continental Teves AG & Co. oHG, 60488 Frankfurt (DE)
(72) Erfinder: KREBS, Stephan, 65760 Eschborn (DE); RÜFFER, Manfred, 65843 Sulzbach (DE); BACHER, Jens, 60487 Frankfurt am Main (DE); KREH, Heinrich, 61197 Florstadt (DE); MILISIC, Lazar, 65779 Kelkheim. (DE); SEITZ, Karlheinz, 64653 Lorsch (DE); KÖNIG, Harald, 61239 Ober-Mörlen (DE); KOLLERS, Michael, 65760 Eschborn (DE); GONZALEZ, Jose, 32549 Bad Oeynhausen (DE); JÜRGING, Michael, 65779 Kelkheim (DE); NIEPENBERG, Marcel, 64521 Groß-Gerau (DE)
(86) Internationale Anmeldenummer: PCT/EP2009/067204
(87) Internationale Veröffentlichungsnummer: WO 2010/069965

(56) Entgegenhaltungen:
- DE-A1-102006 060 645
- DE-A1-102007 005 223
- DE-A1-102007 020 538
- US-A1- 2003 103 843

## Beschreibung

Die Erfindung betrifft ein Motor-Pumpenaggregat gemäß dem Oberbegriff des Patentanspruchs 1.

Zur Bereitstellung von Vakuum für einen pneumatischen Bremskraftverstärker, dessen Innenraum in wenigstens eine Vakuumkammer und eine Arbeitskammer unterteilt ist, werden Vakuumpumpen eingesetzt, die aus der Vakuumkammer Restluft ansaugen und in die Atmosphäre ausstoßen. In der Automobilindustrie werden hierzu in der Regel Flügelzellenpumpen oder Schwenkflügelpumpen eingesetzt. Diese haben prinzipbedingt viel Reibung und müssen geschmiert werden, um eine akzeptable Lebensdauer zu erreichen. Vom Verbrennungsmotor des Kraftfahrzeuges angetriebene Vakuumpumpen mit Flügeln werden daher an den Ölkreislauf des Verbrennungsmotors angeschlossen. Dennoch muss ein nennenswerter Anteil der vom Verbrennungsmotor abgegebenen Leistung zum Antrieb einer solchen Pumpe aufgewendet werden. Und dies auch dann, wenn das Vakuum in der zu evakuierenden Kammer bereits voll ausgebildet ist. Daher ist es sinnvoll, die Vakuumpumpe mit elektrischer Energie zu betreiben und nur dann einzuschalten, wenn der absolute Druck in der Vakuumkammer über einen vorbestimmten Wert steigt.

Weiterhin kann in Fahrzeugen mit Elektro- bzw. Hybridantrieb die Vakuumpumpe nicht bzw. zeitweise nicht durch den Verbrennungsmotor angetrieben werden. Daher werden in diesen Fahrzeugen elektrisch angetriebene Vakuumpumpen eingesetzt.

Eine solche elektrisch angetriebene Pumpe mit einem Schmiermittelkreislauf auszustatten oder an einen solchen anzuschließen, würde einen unverhältnismäßig hohen Aufwand bedeuten. Somit kommen für den Einsatz in Kraftfahrzeugen mit Bremsanlagen mit elektrisch angetriebener Vakuumpumpe nur trocken laufende Vakuumpumpen in Frage. In Flügelzellenpumpen wird hierfür das selbstschmierende Material Graphit verwendet, aus dem mit hohem Aufwand die Flügel mit der erforderlichen Präzision hergestellt werden. Daher sind die Bemühungen dahingehend, zur elektrischen Bereitstellung von Bremsvakuum eine Membranpumpe zu verwenden.

Eine gattungsgemäßes Motor-Pumpenaggregat ist beispielsweise aus der DE 10 2007 005 223 A1 bekannt, wobei die Auslasskanäle des Motor-Pumpenaggregates in den Arbeitsraumdeckeln und im Pumpengehäuse derart angeordnet sind, dass aus den Arbeitsräumen verdrängte Luft in einen, den Kurbelantrieb umgebenden Innenraum des Pumpengehäuses geleitet wird, und wobei eine Luftauslasseinheit vorgesehen ist, welche ein geräuscharmes Ausblasen der Luft aus dem Innenraum durch Umlenken der Luft ermöglicht. Der Innenraum, auch Kurbelraum genannt, dient so als Schalldämpfungsraum, da die ausgeblasene Luft nicht direkt in die Atmosphäre geleitet wird. Durch das Umlenken der Luft in der Luftauslasseinheit kann das Geräuschniveau zusätzlich wesentlich gesenkt werden, so dass Ausblasgeräusche nahezu vermieden werden.
Die Luftauslasseinheit umfasst ein Filtergehäuse, wenigstens einen Filter, einen Luftauslassdeckel, ein Ventilhalteelement sowie einen Ventilkörper und ist als vormontierbare Baugruppe vorgesehen. Ein Zurückströmen der ausgestoßenen Luft wird dadurch verhindert, dass das Filtergehäuse, das Ventilhalteelement sowie der Ventilkörper ein Rückschlagventil bilden.

Es bestehen stets Bestrebungen, die Herstellungskosten sowie den Montageaufwand zu reduzieren. Daher ist es Aufgabe der vorliegenden Erfindung, ein geräuscharmes, kostenreduziertes Motor-Pumpenaggregat bereitzustellen, welches im Vergleich zu dem bekannten, gattungsgemäßen Aggregat einen reduzierten Montageaufwand erfordert. Ferner soll die Bauteilanzahl reduziert werden.

Die Aufgabe wird erfindungsgemäß dadurch gelöst, dass zwischen dem Filtergehäuse und dem Luftauslassdeckel ein Zwischenboden vorgesehen ist, welcher die aus dem Innenraum austretende Luft in der Luftauslasseinheit umlenkt und dass an dem Zwischenboden das Ventilhalteelement einteilig angeformt ist. Hierdurch kann die Montage der Lufteinlasseinheit wesentlich vereinfacht werden und die Bauteilanzahl verringert sich.

Weitere Merkmale, Vorteile und Anwendungsmöglichkeiten der Erfindung gehen aus der nachfolgenden Beschreibung von Ausführungsbeispielen sowie anhand der Zeichnung hervor.

Es zeigt:
- Figur 1: ein erstes Ausführungsbeispiel eines erfindungsgemäßen Motor-Pumpenaggregats in räumlicher Darstellung;
- Figur 2: das Motor-Pumpenaggregat gemäß Fig.1 im Längsschnitt durch eine erste Ebene;
- Figur 3: den Arbeitsraumdeckel gemäß Fig. 1 im Längsschnitt durch eine zweite Ebene;
- Figur 4: Einzelteile des Arbeitsraumdeckels gemäß Fig. 3 in räumlicher Ansicht;
- Figur 5: eine Formdichtung des Arbeitsraumdeckels gemäß Fig. 3 und 4;
- Figur 6: eine Luftauslasseinheit des Motor-Pumpenaggregates gemäß Fig. 1 im Längsschnitt;
- Figur 7: die Luftauslasseinheit gemäß Fig. 6 in Explosionsdarstellung;
- Figur 8: ein Motorblech des Motor-Pumpenaggregates gemäß Fig. 1 in räumlicher Darstellung;
- Figur 9: einen vergrößerten Ausschnitt der Pumpe gemäß Fig. 1;
- Figur 10: ein zweites Ausführungsbeispiel eines erfindungsgemäßen Motor-Pumpenaggregats in räumlicher Darstellung;
- Figur 11: die Luftauslasseinheit des Motor-Pumpenaggregats gemäß Fig. 10 in Explosionsdarstellung und
- Figur 12: eine Formdichtung des Motor-Pumpenaggregats gemäß

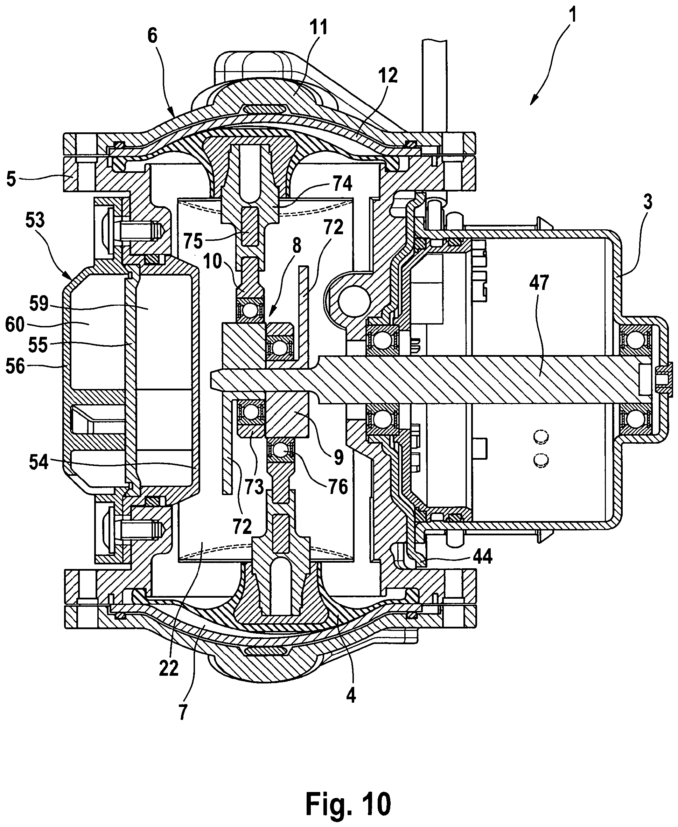

- Fig. 10: in räumlicher Darstellung.

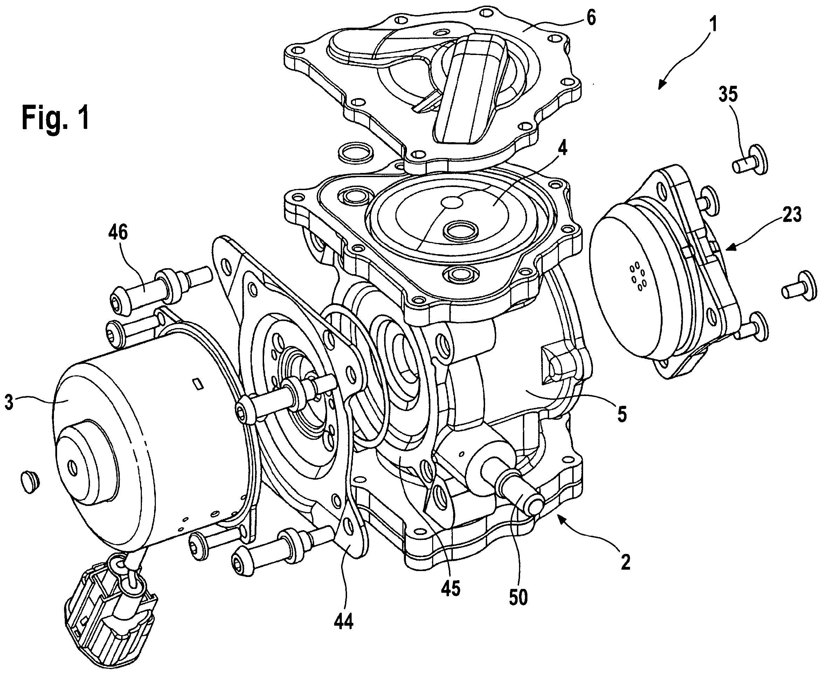

Fig. 1 zeigt ein erfindungsgemäßes Motor-Pumpenaggregat 1 in einer Explosionsdarstellung, welches eine Pumpe 2 mit einem Pumpengehäuse 5 und einen die Pumpe 2 antreibenden elektrischen Motor 3 umfasst, wobei der Motor 3 beispielsweise als Gleichstrommotor ausgebildet sein kann.

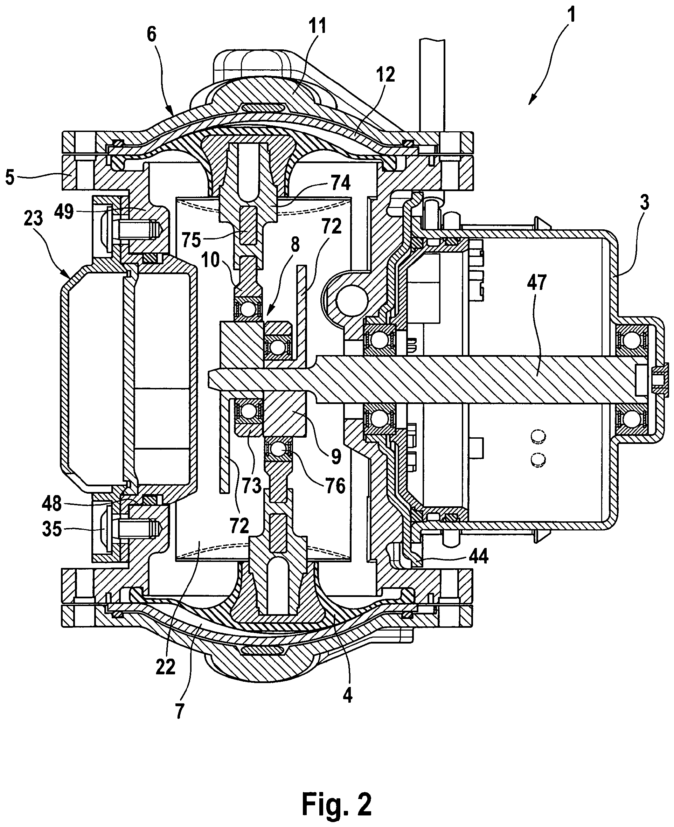

Die Pumpe 2, wie insbesondere aus der Schnittdarstellung gemäß Fig. 2 ersichtlich ist, ist als Doppelmembranpumpe mit zwei gegenüberliegenden Arbeitsmembranen 4 vorgesehen, welche jeweils zwischen dem Pumpengehäuse 5 und einem Arbeitsraumdeckel 6 eingespannt ist und dadurch einen Arbeitsraum 7 begrenzt. Die Arbeitsmembrane 4 sind mittels eines Kurbelantriebs 8 gegensinnig bewegbar, welcher je Arbeitsmembran 4 einen Exzenter 9 und eine Pleuelstange 10 umfasst.

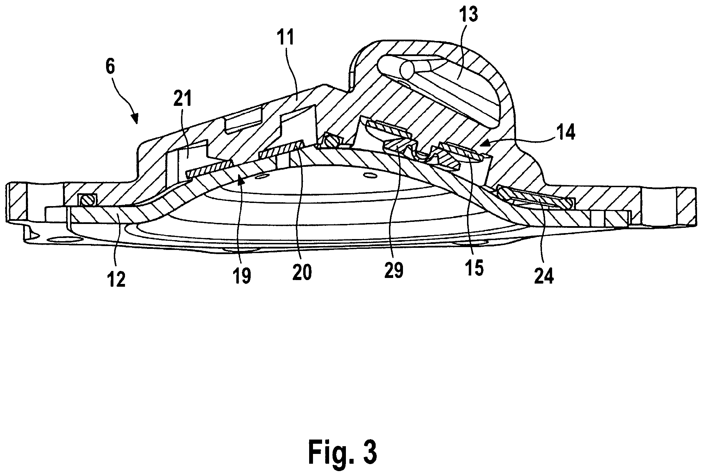

Der in Fig. 3 in Schnittdarstellung gezeigte Arbeitsraumdeckel 6 weist einen Oberdeckel 11 sowie einen Unterdeckel 12 auf, die luftdicht miteinander verschweißt, vernietet bzw. verschraubt sind. Zur Kostenreduzierung ist der Oberdeckel 11 aus Kunststoff vorgesehen und Unterdeckel 12 ist als Stanzteil ausgebildet. Eine ebenfalls kostengünstige Alternative sieht vor, dass der Unterdeckel 12 mittels Aluminiumdruckguss hergestellt ist. Möglich ist auch die Ausbildung des Unterdeckels 12 als Sinterteil.

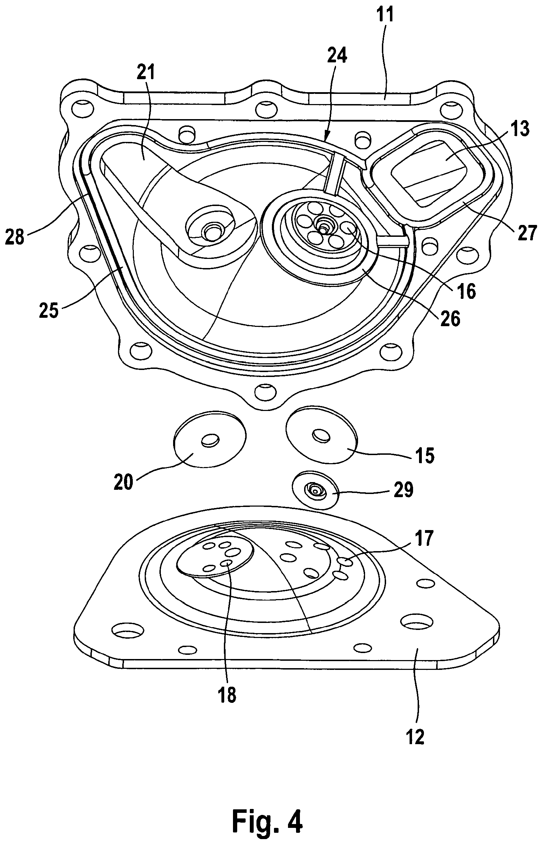

In jedem der Arbeitsraumdeckeln 6 ist ein im Oberdeckel 11 ausgebildete Einlasskanal 13 vorgesehen, der mit Kanälen im Pumpengehäuse 5 mittels eines Dichtelementes luftdicht verbunden ist und die angesaugte Luft zu einem Einlassventil 14 weiterleitet. Das Einlassventil 14 ist als Plattenventil mit einer Ventilscheibe 15 aus elastischem Werkstoff ausgebildet. Hierzu ist Fig. 4 zu entnehmen, welche die Einzelteile des Arbeitsraumdeckels 6 in einer räumlichen Ansicht darstellt, dass die von der elastomeren Ventilscheibe 15 zu bedeckende Gesamtdurchtrittsfläche dabei zweckmäßigerweise in mehrere kleine Durchtrittsflächen mit jeweils kreisförmigem Querschnitt aufgeteilt. Hierfür verzweigt sich der Einlasskanal 13 im Oberdeckel 11 in eine entsprechende Anzahl von Einzelkanälen 16, welche kreisringförmig um eine Mittelachse des Einlassventils 14 angeordnet sind. Damit wird die Durchtrittsfläche des Einlassventils 14 ausgenutzt.

Nach dem Durchströmen des Einlassventils 14 gelangt die angesaugte Luft über Arbeitsraumdeckelöffnungen 17 im Unterdeckel 12 in den Arbeitsraum 7 zwischen Membrane 4 und Arbeitsraumdeckel 6, wird dort komprimiert und über weitere Arbeitsraumdeckelöffnungen 18 zum Auslassventil 19 geführt, welches ebenfalls als Plattenventil mit einer Ventilscheibe 20 aus elastomeren Werkstoff ausgebildet ist.
Wie ersichtlich ist, ist ein Auslasskanal 21 zwischen Oberdeckel 11 und Unterdeckel 12 ausgebildet.

Vom Auslassventil 19 wird die ausgestoßene Luft über den Auslasskanal 21 im Arbeitsraumdeckel 6 zu einem nicht dargestellten Auslasskanal im Pumpengehäuse 5 geleitet. Die Auslasskanäle 21 in den Arbeitsraumdeckeln 6 und im Pumpengehäuse 5 sind luftdicht mittels eines Dichtelements verbunden. Die beiden Auslasskanäle im Pumpengehäuse 5 münden in einen Innenraum 22 des Pumpengehäuses 5, dem so genannten Kurbelraum, welcher den Kurbelantrieb 8 umgibt.

Eine in dem Pumpengehäuse 5 vorgesehene Luftauslasseinheit 23, welche im Nachfolgenden noch ausführlicher beschrieben wird, ermöglicht ein geräuscharmes Ausblasen der Luft aus dem Innenraum 22. Der Innenraum 22 dient so als Schalldämpfungsraum.

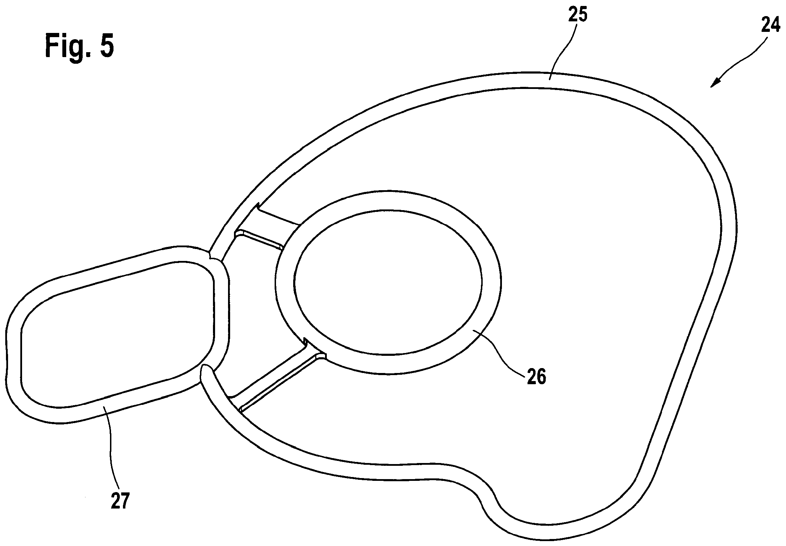

Zwischen dem Oberdeckel 11 und dem Unterdeckel 12 ist zur Abdichtung eine in Fig. 5 dargestellte Formdichtung 24 vorgesehen, die mehrere Dichtungselemente 25,26,27 zur Abdichtung der unterschiedlichen Bereiche zwischen den beiden Bauteilen 11,12 aufweist und in eine entsprechende Ausnehmung 28 des Oberdeckels 11 einlegbar ist. Durch die Verbindung der einzelnen Dichtungselemente 25-27 zur Formdichtung 24 kann die Montage wesentlich vereinfacht und die Herstellkosten können reduziert werden. Des Weiteren wird die Anzahl der einzelnen Bauteile reduziert.

Ein Haltelement 29 im Bereich des Einlassventils 14 hält die Ventilscheibe 15 am Oberdeckel 11 und sorgt gleichzeitig für eine Reduzierung des Arbeitsraum-Totraumes. Hierdurch kann das Vakuum um ca. 5% erhöht werden.

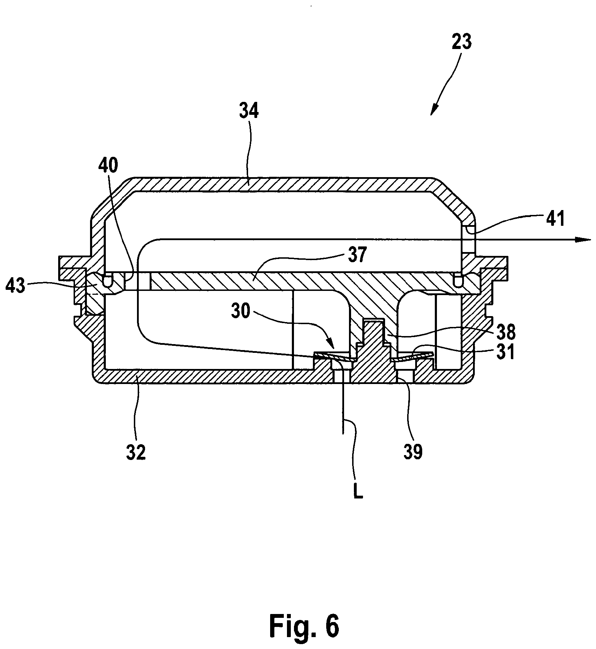

Die in Fig. 6 geschnitten gezeigte Luftauslasseinheit 23 umfasst ein Rückschlagventil 30 umfassend einen ein- oder mehrteiligen Ventilkörper 31, das ein Zurückströmen von bereits ausgestoßener Luft sowie das Eindringen flüssiger oder gasförmiger Substanzen in den Innenraum 22 verhindert.

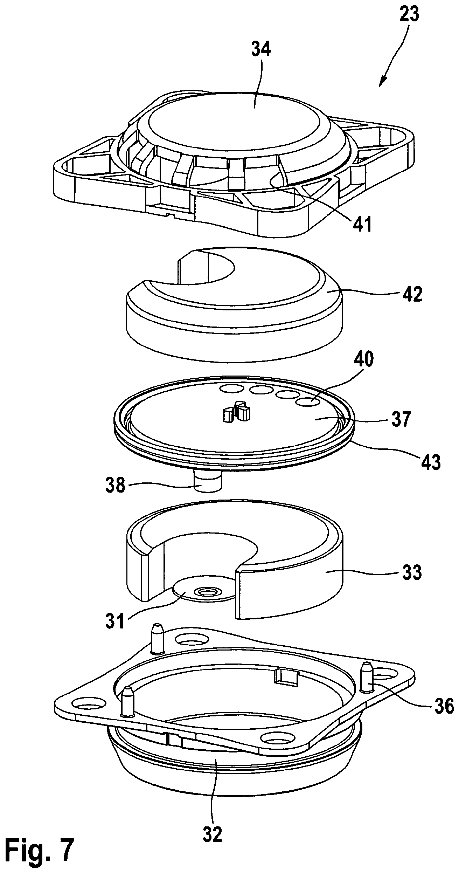

Zusätzlich wird der Luftschall beim Austreten der Luft aus dem Innenraum 22 dadurch vermindert, dass die in Fig. 7 als Explosionszeichnung darstellte Luftauslasseinheit 23 einen, in einem Filtergehäuse 32 angeordneten Filter 33 aufweist. Weiter umfasst die Luftauslasseinheit 23 einen Luftauslassdeckel 34, ein Ventilhalteelement 38 sowie den Ventilkörper 31 und kann als vormontierbare Baugruppe vorgesehen werden. Der Luftauslassdeckel 34 und das Filtergehäuse 32 sind mit Schraubelementen 35 am Pumpengehäuse 5 befestigt, wie aus den Fig. 1 und 2 ersichtlich ist. Das Filtergehäuse 32 ist mit dem Luftauslassdeckel 34 vernietet. Hierzu weisen das Filtergehäuse 32 mehrere Pins 36 und der Luftauslassdeckel 34 entsprechende, nicht ersichtliche Bohrungen auf.

Ein Zwischenboden 37 zwischen dem Filtergehäuse 32 und dem Luftauslassdeckel 34 dient der Umlenkung des Luftstroms L in der Luftauslasseinheit 23, wie in Fig. 6 angedeutet ist.

Wenn der Luftdruck im Innenraum 22 der Pumpe 2 größer wird, als der die Pumpe 2 umgebende Atmosphärendruck, öffnet sich das Rückschlagventil 30, indem sich der Ventilkörper 31 von Öffnungen 39 im Filtergehäuse 32 zumindest teilweise abhebt, und die Luft durch den Filter 33 Richtung Atmosphäre strömt.

Hierzu weist der Zwischenboden 37 Öffnungen 40 auf. Die Luft tritt zuerst durch die Öffnungen 39 des Filtergehäuses 32 hindurch. Die Öffnungen 40 des Zwischenbodens 37 sind derart positioniert, dass die Luft zuerst um 90°, dann um 180° umgelenkt wird, bis sie aus Öffnungen 41 des Luftauslassdeckels 34 austritt. Durch diese Luftumlenkung kann das Geräuschniveau wesentlich gesenkt werden.

Der Zwischenboden 37 kann einfach in die Luftauslasseinheit 23 integriert werden und bildet einen Teil der vormontierbaren Baueinheit. Der Filter 33 ist zwischen dem Filtergehäuse 32 und dem Zwischenboden 37 angeordnet. Zwischen dem Luftauslassdeckel 34 und dem Zwischenboden 37 ist ein weiterer Filter 42 vorgesehen. Somit wird der Luftschall sowohl vor der Umlenkung als auch danach in der Luftauslasseinheit 23 gedämpft.

Weiter ist Fig. 6 zu entnehmen, dass das Ventilhaltelement 38 einteilig an den Zwischenboden 37 angeformt ist, wodurch sich die Bauteilanzahl sowie der Montageaufwand weiter wesentlich reduzieren.

Ein an den Zwischenboden 37 zur Abdichtung der Luftauslasseinheit 23 vorgesehenes angeformtes Dichtelement 43 verstärkt den Effekt der Bauteilreduzierung weiter.

Bei einem nicht dargestellten weiteren Ausführungsbeispiel ist zur weiteren Bauteilreduktion vorgesehen, dass auch der Ventilkörper 31 an dem Zwischenboden 37 bzw. an dem Ventilhaltelement 38 einteilig angeformt ist.

Vorteilhafterweise ist der Zwischenboden 37 kostengünstig und in einfacher Weise aus EPDM (Ethylen-Propylen-Dien-Kautschuk) hergestellt.

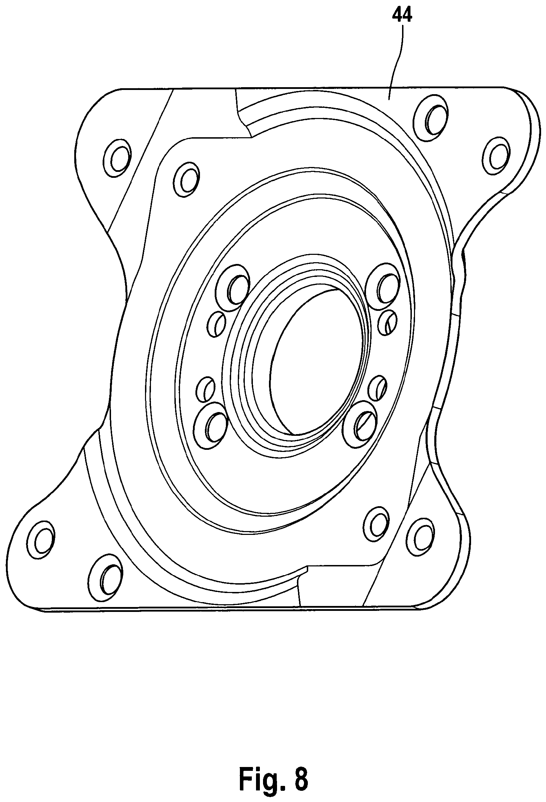

Das Pumpengehäuse 5 ist aus Kunststoff vorgesehen, wodurch eine kostengünstige Herstellung ermöglicht wird. Wie den Fig. 1 und 2 entnommen werden kann, ist zwischen dem Motor 3 und dem Pumpengehäuse 5 ein in Fig. 8 dargestelltes Motorblech 44 angeordnet, welches an einer Motorflanschseite 45 des Pumpengehäuses 5 befestigt ist und vom Motor 3 abgegebene EMV-Strahlen abhält.

Die Befestigung des Motors 3 und des Motorbleches 44 am Pumpengehäuse 5 erfolgt mittels Schraubelementen 46, welche direkt ins Pumpengehäuse 5 eingeschraubt werden.

Zur Befestigung des Motor-Pumpenaggregates 1 im Fahrzeug kann das Motorblech 44 nicht gezeigte Halteelemente aufweist.

Ferner ist Fig. 2 zu entnehmen, dass eine Motorwelle 47 bei diesem Ausführungsbeispiel gleichzeitig als Exzenterwelle dient, welche den Kurbelantrieb 8 mit den Exzentern 9 und den Pleuelstangen 10 trägt.
Es ist jedoch auch eine separate Ausführung von Motorwelle und Exzenterwelle möglich.

Die oben beschriebene Luftauslasseinheit 23 ist zum Einbau in einen Durchbruch 48 einer dem Motor 3 abgewandten Wand 49 des Pumpengehäuses 5 vorgesehen. Dabei erfüllt der Durchbruch 48 vor dem Einsetzen der Luftauslasseinheit 23 die Funktion eines Montagefensters, das einen Zugang zum Innenraum 22 des Pumpengehäuses 5 gestattet.

Ferner ist am Pumpegehäuse 5 ein in Fig. 1 gezeigter Anschluss 50 vorgesehen, über beispielsweise ein angeschlossener Bremskraftverstärker evakuiert wird.

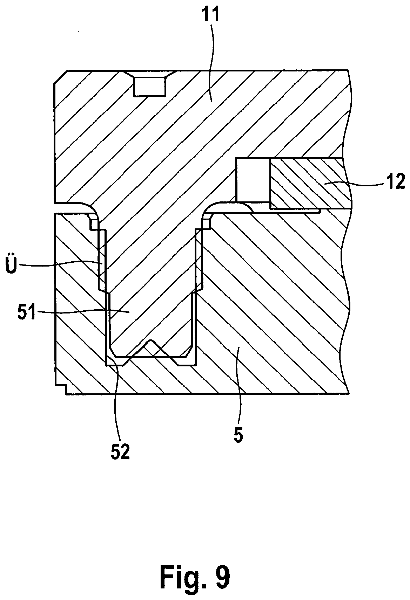

Fig. 9 zeigt einen Ausschnitt der Pumpe 2 des Motor-Pumpenaggregates 1 im Schnitt. Wie ersichtlich ist, weist der Oberdeckel 11 zur Befestigung des Arbeitsraumdeckels 6 an dem Pumpengehäuse 5 Schweißvorsprünge 51 auf, welche mit einem Übermaß Ü in entsprechende Ausnehmungen 52 des Pumpengehäuses 5 eingreifen. Die Schweißvorsprünge 51 sowie das Pumpengehäuse 5 werden punktuell mittels Ultraschall erweicht bzw. aufgeschmolzen, so dass eine sichere Verbindung zwischen den beiden Bauteilen 11,5 entsteht.

Fig. 2 ist ferner zu entnehmen, dass zur Schwingungsoptimierung an den Exzentern 9 jeweils einteilig ein Wuchtgewicht 72 angeformt ist, wobei die Exzenter 9 als Sinterbauteile hergestellt sind. Diese Ausgestaltung der Exzenter 9 bedingt zum einen eine kostengünstige Herstellung und eine vereinfachte Montage, da die Montage der Wuchtgewichte 72 an den Exzentern 9 durch Verschrauben, Verschweißen etc. entfallen kann, und zum anderen eine weitere Bauteilreduzierung.

Zur weiteren Kostenoptimierung sind Pleuelaugen 73 der Pleuelstangen 10 als Sinterbauteile und Pleuelschäfte 74 aus Kunststoff vorgesehen, wobei die Befestigung des Pleuelschaftes 74 an dem Pleuelauge 73 durch Umspritzen eines Ansatzes 75 des Pleuelauges 73 erfolgt. Die Arbeitsmembran 4 kann auf dem Pleuelschaft 74 in einfacher Weise durch Reibschweißen befestigt werden. Kugellager 76 werden in die Pleuelaugen 73 eingepresst.

Ein zweites Ausführungsbeispiel eines erfindungsgemäßen Motor-Pumpenaggregates 1 ist Fig. 10 zu entnehmen. Die Funktion und wesentliche Aufbau unterscheiden sich zum ersten Ausführungsbeispiel nicht, so dass nachstehend lediglich auf die Unterscheide eingegangen wird. Gleiche Bauteile sind mit gleichen Bezugszeichen versehen.

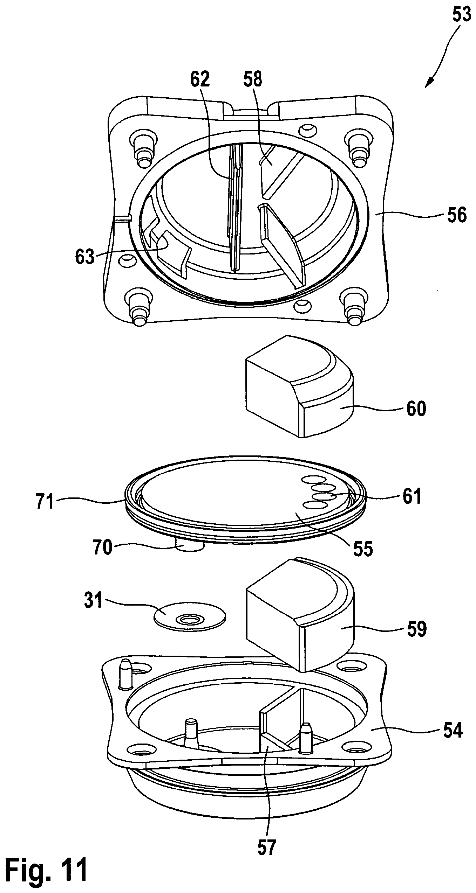

Das zweite Ausführungsbeispiel weist eine verbesserte Luftauslasseinheit 53 auf, die - wie auch zum ersten Ausführungsbeispiel beschrieben - ein Rückschlagventil mit einem Ventilkörper 31 umfasst. Weiter weist auch die in Fig. 11 als Explosionszeichnung darstellte Luftauslasseinheit 53 ein Filtergehäuse 54, ein Zwischenboden 55 mit angeformtem Ventilhalteelement 70 und angeformtem Dichtelement 71 und einen Luftauslassdeckel 56 auf, welche grundsätzlich den Bauteilen Filtergehäuse 32, Zwischenboden 37 und Luftauslassdeckel 34 entsprechen.

Im Unterschied dazu sind im Filtergehäuse 54 sowie im Luftauslassdeckel 56 Rippen 57,58 vorgesehen sind, welche Filter 59,60 im Bereich von Öffnungen 61 des Zwischenbodens 55 positionieren. Hierdurch ist es möglich, die Filter 59,60 im Unterschied zu den Filtern 31 und 42 des ersten Ausführungsbeispiels wesentlich zu verkleinern.

Zudem ist in dem Luftauslassdeckel 56 eine Schwallschutzwand 62 angeordnet, die ein Eindringen von Flüssigkeit in die Pumpe 2 durch Öffnungen 63 des Luftauslassdeckels 56 erschwert.

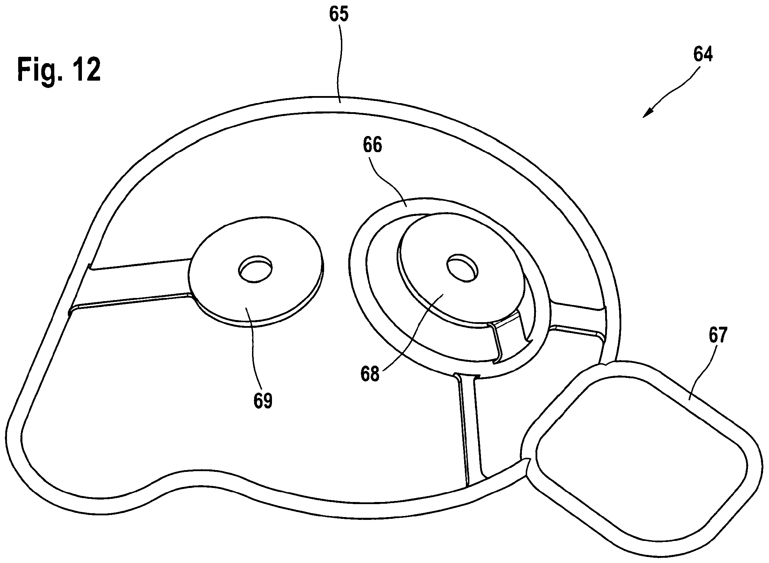

Als weiteren Unterschied weist eine zur Abdichtung von Oberdeckel 11 und Unterdeckel 12 vorgesehene Formdichtung 64, die in Fig. 12 dargestellt ist, neben Dichtungselementen 65,66,67 auch Ventilscheiben 68,69 für das Einlass- und das Auslassventil 14,19 auf, so dass die Montage noch weiter vereinfacht und die Bauteilanzahl noch weiter reduziert werden kann.

### Bezugszeichenliste

- 1: Motor-Pumpenaggregat
- 2: Pumpe
- 3: Motor
- 4: Arbeitsmembran
- 5: Pumpengehäuse
- 6: Arbeitsraumdeckel
- 7: Arbeitsraum
- 8: Kurbelantrieb
- 9: Exzenter
- 10: Pleuelstange
- 11: Oberdeckel
- 12: Unterdeckel
- 13: Einlasskanal
- 14: Einlassventil
- 15: Ventilscheiben
- 16: Einzelkanal
- 17: Arbeitsraumdeckelöffnung
- 18: Arbeitsraumdeckelöffnung
- 19: Auslassventil
- 20: Ventilscheibe
- 21: Auslasskanal
- 22: Innenraum
- 23: Luftauslasseinheit
- 24: Formdichtung
- 25: Dichtungselement
- 26: Dichtungselement
- 27: Dichtungselement
- 28: Ausnehmung
- 29: Halteelement
- 30: Rückschlagventil
- 31: Ventilkörper
- 32: Filtergehäuse
- 33: Filter
- 34: Luftauslassdeckel
- 35: Schraubelement
- 36: Pin
- 37: Zwischenboden
- 38: Ventilhalteelement
- 39: Öffnung
- 40: Öffnung
- 41: Öffnung
- 42: Filter
- 43: Dichtelement
- 44: Motorblech
- 45: Motorflanschseite
- 46: Schraubelement
- 47: Motorwelle
- 48: Durchbruch
- 49: Wand
- 50: Anschluss
- 51: Schweißvorsprung
- 52: Ausnehmung
- 53: Luftauslasseinheit
- 54: Filtergehäuse
- 55: Zwischenboden
- 56: Luftauslassdeckel
- 57: Rippe
- 58: Rippe
- 59: Filter
- 60: Filter
- 61: Öffnung
- 62: Schwallschutzwand
- 63: Öffnung
- 64: Formdichtung
- 65: Dichtelement
- 66: Dichtelement
- 67: Dichtelement
- 68: Ventilscheibe
- 69: Ventilscheibe
- 70: Ventilhalteelement
- 71: Dichtelement
- 72: Wuchtgewicht
- 73: Pleuelauge
- 74: Pleuelschaft
- 75: Ansatz
- 76: Kugellager

- Ü: Übermaß

## Patentansprüche

1. Motor-Pumpenaggregat (1), zur Bereitstellung von Druck für eine Bremsbetätigungseinrichtung einer Kraftfahrzeugbremsanlage mit einem pneumatischen Bremskraftverstärker, umfassend eine Pumpe (2) und einen die Pumpe (2) antreibenden elektrischen Motor (3), wobei die Pumpe (2) als Doppelmembranpumpe mit zwei gegenüberliegenden Arbeitsmembranen (4) vorgesehen ist, welche jeweils zwischen einem Pumpengehäuse (5) und einem Arbeitsraumdeckel (6) eingespannt ist und dadurch einen Arbeitsraum (7) begrenzt und welche mittels eines, Exzenter (9) und Pleuelstangen (10) aufweisenden Kurbelantriebs (8) bewegbar sind, wobei dem Arbeitsraum (7) jeweils ein Einlasskanal (16) mit Einlassventil (14) und ein Auslasskanal (21) mit Auslassventil (19) zugeordnet ist, wobei die Auslasskanäle (21) in den Arbeitsraumdeckeln (6) und im Pumpengehäuse (5) derart angeordnet vorgesehen sind, dass aus den Arbeitsräumen (7) verdrängte Luft in einen, den Kurbelantrieb umgebenden Innenraum (22) des Pumpengehäuses (5) geleitet wird, und dass eine Luftauslasseinheit (23,53) vorgesehen ist, welche ein geräuscharmes Ausblasen der Luft aus dem Innenraum (22) durch Umlenken der Luft ermöglicht, und wobei die Luftauslasseinheit (23,53):
- ein Filtergehäuse (32,54), das an dem Pumpengehäuse (5) befestigt ist,
- ein mit dem Filtergehäuse (32,54) verbundenes Luftauslassdeckel (34,56) mit Öffnungen (41,63) zum Herauslassen der Luft aus der Luftauslasseinheit (23,53) in die Umgebung,
- einen zwischen dem Filtergehäuse (32,54) und dem Luftauslassdeckel (34,56) angeordneten Filter (33,59),
- ein Ventilhalteelement (38,70) sowie
- einen Ventilkörper (31) umfasst, **dadurch gekennzeichnet, dass** in der Luftauslasseinheit (23,53) zwischen dem Filtergehäuse (32,54) und dem Luftauslassdeckel(34,56) ein Zwischenboden (37,55) mit Öffnungen (40,61) vorgesehen ist, welcher die aus dem Innenraum (22) austretende Luft an den Öffnungen (40,61) um mindestens 90° umlenkt und dass an dem Zwischenboden (37,55) das Ventilhalteelement (38,70) einteilig angeformt ist.

2. Motor-Pumpenaggregat nach Anspruch 1, **dadurch gekennzeichnet, dass** der Zwischenboden (37,55) zur Abdichtung der Lufteinlasseinheit (23,53) ein am Umfang angeformtes Dichtelement (43,71) aufweist.

3. Motor-Pumpenaggregat nach Anspruch 1 oder 2, **dadurch gekennzeichnet, dass** der Ventilkörper (31) an dem Ventilhalteelement (38,70) einteilig angeformt ist.

4. Motor-Pumpenaggregat nach einem der Ansprüche 1 bis 3, **dadurch gekennzeichnet, dass** der Zwischenboden (37,55) aus Ethylen-Propylen-Dien-Kautschuk hergestellt ist.

5. Motor-Pumpenaggregat nach Anspruch 4, **dadurch gekennzeichnet, dass** der Filter (33,59) zwischen dem Filtergehäuse (32,54) und dem Zwischenboden (37,55) angeordnet ist und zwischen dem Luftauslassdeckel(34,56) und dem Zwischenboden (37,55) ein weiterer Filter (42,60) vorgesehen ist.

6. Motor-Pumpenaggregat nach Anspruch 4, **dadurch gekennzeichnet, dass** im Filtergehäuse (54) sowie im Luftauslassdeckel (56) Rippen (57,58) vorgesehen sind, welche die Filter (59,60) im Bereich von Öffnungen (61) im Zwischenboden (55) positionieren.

7. Motor-Pumpenaggregat nach Anspruch 6, **dadurch gekennzeichnet, dass** der Luftauslassdeckel (56) wenigstens eine Schwallschutzwand (62) aufweist.

8. Motor-Pumpenaggregat nach einem der vorangegangenen Ansprüche, **dadurch gekennzeichnet, dass** das Pumpengehäuse (5) aus Kunststoff vorgesehen ist und zwischen dem Pumpengehäuse (5) und dem Motor (3) ein Motorblech (44) befestigt ist.

9. Motor-Pumpenaggregat nach Anspruch 8, **dadurch gekennzeichnet, dass** das Motorblech (44) Halteelemente zur Befestigung des Motor-Pumpenaggregates (1) aufweist.

10. Motor-Pumpenaggregat nach einem der vorangegangenen Ansprüche, dessen Arbeitsraumdeckel (6) einen Oberdeckel (11) sowie einen Unterdeckel (12) aufweist, welche abdichtend miteinander verbunden sind, wobei die Ventile (14,19) zwischen Oberdeckel (11) und Unterdeckel (12) vorgesehen sind, **dadurch gekennzeichnet, dass** der Oberdeckel (11) aus Kunststoff ausgebildet ist und der Unterdeckel (12) als Stanzteil oder als Sinterteil vorgesehen oder mittels Aluminiumdruckguss hergestellt ist.

11. Motor-Pumpenaggregat nach einem der vorangegangenen Ansprüche, **dadurch gekennzeichnet, dass** der Arbeitraumdeckel (6) mit dem Pumpengehäuse (5) verschweißt vorgesehen ist.

12. Motor-Pumpenaggregat nach Anspruch 10 und 11, **dadurch gekennzeichnet, dass** der Oberdeckel (11) mehrere Schweißvorsprünge (51) aufweist, welche mit einem Übermaß (Ü) in entsprechende Ausnehmungen (52) des Pumpengehäuses (5) eingreifen, wobei der Oberdeckel (11) und das Pumpengehäuse (5) mittels Ultraschallschweißen miteinander verschweißt sind.

13. Motor-Pumpenaggregat nach einem der Ansprüche 10 bis 12, **dadurch gekennzeichnet, dass** zur Abdichtung des Oberdeckels (11) und des Unterdeckels (12) eine Formdichtung (24,64) vorgesehen ist, welche mehrere Dichtungselementente (25,26,27,65,66,67) aufweist.

14. Motor-Pumpenaggregat nach. Anspruch 13, **dadurch gekennzeichnet, dass** an die Formdichtung (64) Ventilscheiben (68,69) von den Einlass- und Auslassventilen (14,19) angeformt sind.

15. Motor-Pumpenaggregat nach Anspruch 13, **dadurch gekennzeichnet, dass** ein Halteelement (29) für die Ventilscheibe (15) des Einlassventils (14) vorgesehen ist, welches zwischen Unterdeckel (12) und Oberdeckel (11) angeordnet ist.

16. Motor-Pumpenaggregat nach einem der vorangegangenen Ansprüche, **dadurch gekennzeichnet, dass** die Exzenter (9) als Sinterbauteile vorgesehen sind und jeweils ein Wuchtgewicht (72) aufweisen, welches einteilig an den Exzenter (9) angeformt ist.

17. Motor-Pumpenaggregat nach einem der vorangegangenen Ansprüche, **dadurch gekennzeichnet, dass** Pleuelaugen (73) der Pleuelstangen (10) als Sinterbauteile und Pleuelschäfte (74) aus Kunststoff vorgesehen sind, wobei die Befestigung des Pleuelschaftes (74) an dem Pleuelauge (73) durch Umspritzen eines Ansatzes (75) des Pleuelauges (73) vorgesehen ist.

## Claims

1. Motor-pump assembly (1), for providing pressure for a brake actuating device of a motor vehicle brake system having a pneumatic brake booster, comprising a pump (2) and an electric motor (3) which drives the pump (2), wherein the pump (2) is provided as a double diaphragm pump with two working diaphragms (4) which are located opposite one another and are each clamped in between a pump housing (5) and a working space cover (6) and as a result bound a working space (7), and which can be moved by means of a crank drive (8) having an eccentric (9) and connecting rods (10), wherein the working space (7) is respectively assigned an inlet duct (16) with an inlet valve (14) and an outlet duct (21) with an outlet valve (19), wherein the outlet ducts (21) are provided arranged in the working space covers (6) and in the pump housing (5) in such a way that air which is expelled from the working spaces (7) is conducted into an interior space (22), surrounding the crank drive, of the pump housing (5), and that an air outlet unit (23, 53) is provided which permits low-noise expulsion of the air from the interior space (22) by deflecting the air, and wherein the air outlet unit (23, 53) comprises:
- a filter housing (32, 54), which is attached to the pump housing (5),
- an outlet cover (34, 56) which is connected to the filter housing (32, 54) and has openings (41, 63) for letting out the air from the air outlet unit (23, 53) into the surroundings,
- a filter (33, 59) which is arranged between the filter housing (32, 54) and the air outlet cover (34, 56),
- a valve holding element (38, 70) and
- a valve body (31), **characterized in that** an intermediate floor (37, 55) with openings (40, 61), which deflects the air emerging from the interior space (22) at the openings (40, 61) by at least 90°, is provided in the air outlet unit (23, 53) between the filter housing (32, 54) and the air outlet cover (34, 56), and **in that** the valve holding element (38, 70) is integrally molded on the intermediate floor (37, 55).

2. Motor-pump assembly according to Claim 1, **characterized in that** the intermediate floor (37, 55) has a seal-forming element (43, 71) which is molded on the circumference for the purpose of sealing the air inlet unit (23, 53).

3. Motor-pump assembly according to Claim 1 or 2, **characterized in that** the valve body (31) is integrally molded on the valve holding element (38, 70) .

4. Motor-pump assembly according to one of Claims 1 to 3, **characterized in that** the intermediate floor (37, 55) is manufactured from ethylene propylene diene rubber.

5. Motor-pump assembly according to Claim 4, **characterized in that** the filter (33, 59) is arranged between the filter housing (32, 54) and the intermediate floor (37, 55), and a further filter (42, 60) is provided between the air outlet cover (34, 56) and the intermediate floor (37, 55).

6. Motor-pump assembly according to Claim 4, **characterized in that** ribs (57, 58) are provided in the filter housing (54) and in the air outlet cover (56), which ribs (57, 58) position the filters (59, 60) in the region of openings (61) in the intermediate floor (55).

7. Motor-pump assembly according to Claim 6, **characterized in that** the air outlet cover (56) has at least one surge protection wall (62).

8. Motor-pump assembly according to one of the preceding claims, **characterized in that** the pump housing (5) is provided from plastic, and a motor laminate (44) is attached between the pump housing (5) and the motor (3).

9. Motor-pump assembly according to Claim 8, **characterized in that** the motor laminate (44) has holding elements for attaching the motor-pump assembly (1).

10. Motor-pump assembly according to one of the preceding claims, the working space cover (6) of which has an upper cover (11) and a lower cover (12) which are connected to one another in a seal-forming fashion, wherein the valves (14, 19) are provided between the upper cover (11) and the lower cover (12), **characterized in that** the upper cover (11) is molded from plastic and the lower cover (12) is provided as a punched part or as a sintered part or is manufactured by means of aluminum die casting.

11. Motor-pump assembly according to one of the preceding claims, **characterized in that** the working space cover (6) is provided welded to the pump housing (5).

12. Motor-pump assembly according to Claims 10 and 11, **characterized in that** the upper cover (11) has a plurality of welding projections (51) which engage by a protruding distance (U) in corresponding recesses (52) in the pump housing (5), wherein the upper cover (11) and the pump housing (5) are welded to one another by means of ultrasonic welding.

13. Motor-pump assembly according to one of Claims 10 to 12, **characterized in that**, in order to seal the upper cover (11) and the lower cover (12), a molded seal (24, 64) is provided which has a plurality of seal-forming elements (25, 26, 27, 65, 66, 67).

14. Motor-pump assembly according to Claim 13, **characterized in that** valve disks (68, 69) of the inlet valves and outlet valves (14, 19) are molded onto the molded seal (64).

15. Motor-pump assembly according to Claim 13, **characterized in that** a holding element (29) is provided for the valve disk (15) of the inlet valve (14), which holding element (29) is arranged between the lower cover (12) and the upper cover (11).

16. Motor-pump assembly according to one of the preceding claims, **characterized in that** the eccentrics (9) are provided as sintered components and each have an unbalance weight (72) which is integrally molded onto the eccentric (9).

17. Motor-pump assembly according to one of the preceding claims, **characterized in that** connecting eyelets (73) of the connecting rods (10) are provided as sintered components and connecting rod shanks (74) made of plastic are provided, wherein the attachment of the connecting rod shank (74) to the connecting eyelet (73) is provided by encapsulating an extension (75) of the connecting eyelet (73) by injection molding.

## Revendications

1. Groupe motopompe (1), destiné à fournir de la pression pour un dispositif d'actionnement de frein d'une installation de freinage de véhicule automobile avec un servofrein pneumatique, comprenant une pompe (2) et un moteur électrique (3) entraînant la pompe (2), dans lequel la pompe (2) est prévue sous la forme d'une pompe à double membrane avec deux membranes de travail opposées (4), qui sont respectivement tendues entre un corps de pompe (5) et un couvercle de chambre de travail (6) et limitent ainsi une chambre de travail (7) et qui peuvent être déplacées au moyen d'un entraînement à manivelle (8) présentant un excentrique (9) et des bielles (10), dans lequel un canal d'admission (16) avec une soupape d'admission (14) et un canal d'échappement (21) avec une soupape d'échappement (19) est respectivement associé à la chambre de travail (7), dans lequel les canaux d'échappement (21) sont prévus dans les couvercles de chambre de travail (6) et dans le corps de pompe (5) avec une disposition telle que l'air refoulé hors des chambres de travail (7) soit conduit dans une chambre intérieure (22) du corps de pompe (5) qui entoure l'entraînement à manivelle, et qu'il soit prévu une unité d'échappement d'air (23, 53), qui permet une expulsion silencieuse de l'air hors de la chambre intérieure (22) par déviation de l'air, et dans lequel l'unité d'échappement d'air (23, 53) comprend:
- un boîtier de filtre (32, 54), qui est fixé au corps de pompe (5),
- un couvercle d'échappement d'air (34, 56) assemblé au boîtier de filtre (32, 54), avec des ouvertures (41, 63) pour l'évacuation de l'air hors de l'unité d'échappement d'air (23, 53) dans l'atmosphère,
- un filtre (33, 59) disposé entre le boîtier de filtre (32, 54) et le couvercle d'échappement d'air (34, 56),
- un élément de maintien de soupape (38, 70), ainsi que
- un corps de soupape (31),
**caractérisé en ce qu'**il est prévu dans l'unité d'échappement d'air (23, 53), entre le boîtier de filtre (32, 54) et le couvercle d'échappement d'air (34, 56), un fond intermédiaire (37, 55) avec des ouvertures (40, 61), qui dévie l'air sortant de la chambre intérieure (22) aux ouvertures (40, 61) d'au moins 90° et **en ce que** l'élément de maintien de soupape (38, 70) est formé d'une seule pièce sur le fond intermédiaire (37, 55).

2. Groupe motopompe selon la revendication 1, **caractérisé en ce que** le fond intermédiaire (37, 55) présente un élément d'étanchéité (43, 71) formé à la périphérie pour l'étanchéité de l'unité d'admission d'air (23, 53).

3. Groupe motopompe selon la revendication 1 ou 2, **caractérisé en ce que** le corps de soupape (31) est formé en une seule pièce sur l'élément de maintien de soupape (38, 70).

4. Groupe motopompe selon l'une quelconque des revendications 1 à 3, **caractérisé en ce que** le fond intermédiaire (37, 55) est fabriqué en caoutchouc éthylène-propylène-diène.

5. Groupe motopompe selon la revendication 4, **caractérisé en ce que** le filtre (33, 59) est disposé entre le boîtier de filtre (32, 54) et le fond intermédiaire (37, 55) et il est prévu un autre filtre (42, 60) entre le couvercle d'échappement d'air (34, 56) et le fond intermédiaire (37, 55).

6. Groupe motopompe selon la revendication 4, **caractérisé en ce qu'**il est prévu dans le boîtier de filtre (54) ainsi que dans le couvercle d'échappement d'air (56) des nervures (57, 58), qui positionnent les filtres (59, 60) dans la région des ouvertures (61) dans le fond intermédiaire (55).

7. Groupe motopompe selon la revendication 6, **caractérisé en ce que** le couvercle d'échappement d'air (56) présente au moins ne paroi de protection contre les éclaboussures (62).

8. Groupe motopompe selon l'une quelconque des revendications précédentes, **caractérisé en ce que** le corps de pompe (5) est prévu en matière plastique et une tôle de moteur (44) est fixée entre le corps de pompe (5) et le moteur (3).

9. Groupe motopompe selon la revendication 8, **caractérisé en ce que** la tôle de moteur (44) présente des éléments de maintien pour la fixation du groupe motopompe (1) .

10. Groupe motopompe selon l'une quelconque des revendications précédentes, dont le couvercle de chambre de travail (6) présente un couvercle supérieur (11) ainsi qu'un couvercle inférieur (12), qui sont assemblés l'un à l'autre de façon étanche, dans lequel les soupapes (14, 19) sont prévues entre le couvercle supérieur (11) et le couvercle inférieur (12), **caractérisé en ce que** le couvercle supérieur (11) est formé en matière plastique et le couvercle inférieur (12) est prévu sous forme de pièce estampée ou de pièce frittée et/ou est fabriqué par coulée d'aluminium sous pression.

11. Groupe motopompe selon l'une quelconque des revendications précédentes, **caractérisé en ce que** le couvercle de chambre de travail (6) est prévu sous forme soudée au corps de pompe (5).

12. Groupe motopompe selon la revendication 10 et 11, **caractérisé en ce que** le couvercle supérieur (11) présente plusieurs saillies de soudage (51), qui s'engagent avec une cote (Ü) dans des évidements correspondants (52) du corps de pompe (5), dans lequel le couvercle supérieur (11) et le corps de pompe (5) sont soudés l'un à l'autre par soudage aux ultrasons.

13. Groupe motopompe selon l'une quelconque des revendications 10 à 12, **caractérisé en ce qu'**il est prévu pour l'étanchéité du couvercle supérieur (11) et du couvercle inférieur (12) un joint moulé (24, 64), qui présente plusieurs éléments d'étanchéité (25, 26, 27, 65, 66, 67).

14. Groupe motopompe selon la revendication 13, **caractérisé en ce que** des disques de soupape (68, 69) des soupapes d'admission et d'échappement (14, 19) sont formés sur le joint moulé (64).

15. Groupe motopompe selon la revendication 13, **caractérisé en ce qu'**il est prévu un élément de maintien (29) pour le disque de soupape (15) de la soupape d'admission (14), qui est disposé entre le couvercle inférieur (12) et le couvercle supérieur (11).

16. Groupe motopompe selon l'une quelconque des revendications précédentes, **caractérisé en ce que** les excentriques (9) sont prévus sous forme de pièces frittées et présentent chacun un poids d'équilibrage (72), qui est formé d'une seule pièce sur l'excentrique (9).

17. Groupe motopompe selon l'une quelconque des revendications précédentes, **caractérisé en ce qu'**il est prévu des têtes de bielle (73) des bielles (10) sous forme de pièces frittées et des corps de bielle (74) en matière plastique, dans lequel la fixation du corps de bielle (74) à la tête de bielle (73) est prévue par enrobage par projection d'un élément (75) de la tête de bielle (73).
